# FASCICULE DE BREVET EUROPEEN

(11) **EP 1 679 453 B1**
(45) Date de publication et mention de la délivrance du brevet: **25.08.2010**
(21) Numéro de dépôt: 05292801.7
(22) Date de dépôt: 27.12.2005
(51) Int. Cl.: F16D 65/14, B64C 25/42, B60T 8/32

(54) **Procédé de gestion de l'effort de parc dans un système de freinage de véhicule équipé de freins électriques**
Regelungsverfahren für die Kraft der Parkbremse in einem Bremssystem eines Fahrzeuges mit elektrischen Bremsen
Control method for the parking effort in a braking system of a vehicle equipped with electric brakes

(30) Priorité: 11.01.2005 FR 0500261
(43) Date de publication de la demande: 12.07.2006
(73) Titulaire: MESSIER-BUGATTI, 78140 Vélizy Villacoublay (FR)
(72) Inventeur: Chico, Philippe, 92100 Boulogne Billancourt (FR); Girod, Pierre, 75017 Paris (FR)
(74) Mandataire: Parzy, Benjamin Alain

(56) Documents cités:
- US-A1- 2002 117 892
- US-A1- 2004 074 709
- US-B1- 6 471 017

## Description

L'invention concerne un procédé de gestion de l'effort de parc généré par un système de freinage de véhicule équipé de freins électriques.

### ARRIERE-PLAN DE L'INVENTION

Les freins électriques de véhicule, notamment un aéronef, comportent en général au moins un actionneur électrique qui comprend un poussoir actionné par un moteur électrique pour appliquer sélectivement un effort sur des éléments de friction du frein.

En vue de-bloquer le véhicule par exemple lorsque celui-ci est à l'arrêt sur un parking, on place le poussoir de l'actionneur dans une position dans laquelle il exerce sur les éléments de friction un effort commandé puis on bloque le poussoir dans cette position de sorte qu'il continue à exercer un effort de parc sur les éléments de friction.

L'effort de parc est ainsi maintenu alors que le moteur électrique n'est pas commandé, ce qui permet de couper l'alimentation du moteur et ainsi de diminuer la consommation électrique du frein. L'effort de parc peut dès lors être maintenu alors que le véhicule est arrêté et hors tension.

Un tel procédé est substantiellement connu du document US 2002/0117892 A1.

Cependant, dans certaines circonstances, l'effort de parc ainsi maintenu peut diminuer jusqu'à une valeur critique qui ne permet plus de maintenir le véhicule immobile.

C'est par exemple le cas pour un aéronef qui a été immobilisé rapidement après un freinage sévère consécutif à un décollage avorté à pleine charge. Après le blocage du poussoir, les divers constituants du frein subissent des dilatations provoquées par la chaleur dégagée par le frein lors du freinage sévère. Ces dilatations peuvent conduire à éloigner l'actionneur des éléments de friction en regard, ce qui entraîne une diminution de l'effort de parc exercé par l'actionneur, voire son annulation, de sorte que l'aéronef n'est plus immobilisé, ce qui peut poser de graves problèmes de sécurité.

Il est à noter que ce problème ne se pose pas pour un aéronef équipé de freins hydrauliques pour lequel l'effort de parc est maintenu en connectant les pistons des freins à un ou plusieurs accumulateurs qui imposent leur pression aux pistons quel que soit l'état de dilatation des freins.

### OBJET DE L'INVENTION

L'invention a pour objet un procédé de gestion de l'effort de parc exercé par un système de freinage de véhicule équipé de freins électriques, permettant d'éviter l'inconvénient précité.

### BREVE DESCRIPTION DE L'INVENTION

En vue de la réalisation de ce but, on propose un procédé de gestion d'un effort de parc dans un système de freinage pour véhicule équipé d'au moins un frein électrique comportant au moins un actionneur électromécanique qui comprend un poussoir actionné par un moteur électrique pour appliquer sélectivement un effort sur des éléments de friction du frein, le procédé comportant l'étape de faire exercer par le poussoir un effort de parc initialement égal à un effort de parc nominal sur les éléments de friction de sorte que l'effort de parc soit maintenu en l'absence d'action du moteur électrique. Selon l'invention, le procédé comporte l'étape d'ajuster au moins une fois ledit effort de parc.

Ainsi, l'ajustement de l'effort permet d'éviter que l'effort de parc ne descende, par exemple sous l'effet des dilatations, sous un seuil d'effort minimal qui compromettrait le maintien du véhicule.

En particulier, pour un actionneur ayant un organe de blocage du poussoir qui est activé pour maintenir l'effort de parc, le procédé de l'invention comporte l'étape, avant d'ajuster l'effort de parc, de désactiver préalablement l'organe de blocage, puis réactiver l'organe de blocage après ajustement de l'effort de parc.

Conformément à un premier mode particulier de mise en oeuvre du procédé de l'invention, l'étape de réajustement de l'effort de parc est déclenchée à des instants déterminés en fonction d'une évolution de l'effort de parc.

De préférence alors, ces instants correspondent à un franchissement par l'effort de parc d'au moins un seuil prédéterminé, par exemple, un seuil d'effort minimal pour éviter une libération du véhicule, un seuil d'effort maximal pour éviter une surcontrainte des éléments de friction, ou encore les deux seuils à la fois.

En variante, ces instants correspondent au franchissement d'au moins un seuil prédéterminé par une information représentative d'une dilatation d'au moins une pièce structurelle du frein.

Conformément à un deuxième mode particulier de mise en oeuvre du procédé de l'invention, l'étape de réajustement de l'effort de parc est déclenchée à des instants indépendants d'une évolution de l'effort de parc.

Ce type de mise en oeuvre est particulièrement adapté pour des périodes d'arrêt du véhicule, alors qu'il est hors tension et que la seule source d'alimentation électrique est la batterie.

Selon un aspect particulier de l'invention, préalablement à l'étape d'ajustement, le moteur électrique de l'actionneur est asservi pour empêcher le poussoir de reculer par rapport aux éléments de friction.

Cet asservissement empêche une perte d'effort brutale pouvant compromettre le maintien du véhicule si cette perte intervient sur un nombre important d'actionneurs.

Selon un mode de mise en oeuvre de l'invention, l'ajustement de l'effort de parc comprend l'action de commander le moteur électrique pour faire coïncider sensiblement l'effort de parc avec l'effort de parc nominal. On ajuste ainsi l'effort de parc de façon à lui faire retrouver le niveau initial auquel il avait été réglé.

Selon un mode de mise en oeuvre adapté à un actionneur asservi en position, l'étape de réajustement de l'effort de parc comprend les opérations de, une fois le poussoir débloqué :
- éloigner le poussoir des éléments de friction ;
- avancer le poussoir jusqu'à une position de contact avec les éléments de friction;
- avancer le poussoir d'une distance prédéterminée comptée à partir de la position de contact.

Conformément à un mode de mise oeuvre du procédé de l'invention pour un système de freinage comportant plusieurs actionneurs, ledit procédé est mis en oeuvre de sorte qu'à tout instant, l'étape de réajustement n'est conduite simultanément que pour une partie au plus des actionneurs du véhicule.

Il est ainsi possible de garder en prise un nombre suffisant d'actionneurs pour maintenir le véhicule immobile.

De préférence, lorsque le procédé de l'invention est appliqué à un système de freinage dont au moins un frein comporte plusieurs actionneurs, ledit procédé est mis en oeuvre de sorte, qu'à tout instant, l'étape de réajustement n'est conduite simultanément que pour une partie au plus des actionneurs du frein.

On évite ainsi que ledit frein ne soit totalement relâché.

### BREVE DESCRIPTION DES DESSINS

L'invention sera mieux comprise à la lumière de la description qui suit en référence aux figures des dessins annexés parmi lesquelles :
- la figure 1 est une vue schématique d'un aéronef comportant plusieurs roues freinées ;
- la figure 2 est une vue en coupe d'une roue équipée d'un frein à actionneurs électriques ;
- la figure 3 est un graphe de l'évolution dans le temps de l'effort de parc d'un actionneur lors de la mise en oeuvre d'une forme particulière du procédé de l'invention ;
- la figure 4 est un graphe de l'évolution dans le temps de l'effort de parc d'un actionneur lors de la mise en oeuvre d'une autre forme particulière du procédé de l'invention.

### DESCRIPTION DETAILLEE DE L'INVENTION

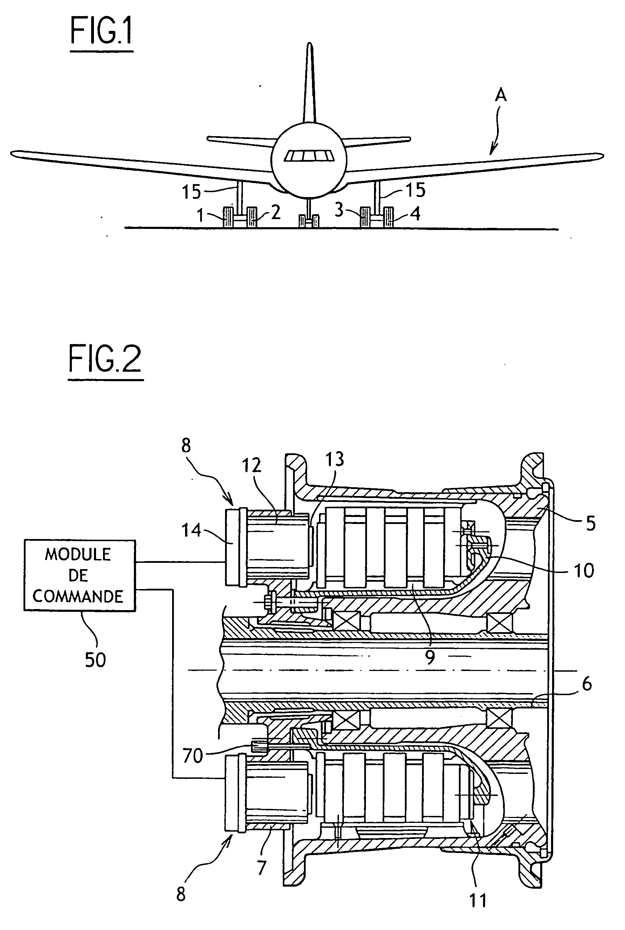

Le procédé de l'invention est détaillé ici en application à un aéronef A tel que celui illustré à la figure 1 qui comporte quatre roues freinées numérotées de 1 à 4 portées par des atterrisseurs 15.

L'une de ces roues freinées est illustrée sur la figure 2. Chacune des roues comporte une jante 5 adaptée à recevoir un pneumatique (non représenté ici) et montée à rotation sur un essieu 6 porté par l'un des atterrisseurs 15 de l'aéronef. Sur l'essieu 6 est montée une couronne 7 portant des actionneurs 8. Sur la couronne 7 est fixé un tube de torsion 9 qui s'étend dans la jante 5 pour se terminer par un appui 10. La couronne 7, et donc le tube de torsion 9, sont arrêtés en rotation vis à vis de l'essieu 6 par des moyens d'arrêt non représentés ici.

Entre l'appui 10 et les actionneurs 8 s'étend une pile de disques 11 composée de rotors qui sont solidaires en rotation de la jante 5 et de stators qui sont solidaires en rotation du tube de torsion 9.

Chacun des actionneurs 8 comporte un corps 12 dans lequel un poussoir 13 est monté pour se déplacer linéairement en regard de la pile de disques 11 sous l'action d'un moteur électrique contenu dans le corps 12, afin d'appliquer sur la pile de disques 11 un effort commandé de pression qui, en induisant des efforts de friction entre les rotors et les stators de la pile de disques, contribue à ralentir la rotation de la jante 5, et donc à freiner l'aéronef A.

Chacun des actionneurs 8 comporte un organe de blocage 14 adapté à bloquer le poussoir 13 dans la position où il se trouve lors de l'activation de l'organe de blocage 14. Le système de freinage comporte un module de commande 50 adapté à faire fonctionner les actionneurs 7 des freins soit dans un mode commandé pour lequel chacun des actionneurs est commandé pour appliquer sélectivement un effort sur la pile de disques 11 associée en réponse à une consigne de freinage, soit dans un mode de parc dans lequel les actionneurs 8 sont bloqués dans une position à l'aide de l'organe de blocage 14 pour laquelle le poussoir 13 exerce sur la pile de disques 11 associée un effort de parc. Dans le mode de parc, l'effort de parc est ainsi tenu sans l'aide du moteur électrique, ce qui permet de couper l'alimentation électrique de ce dernier.

Pour passer au mode de parc, lorsque l'aéronef est au parking, le module de commande 50 commande tout d'abord les poussoirs 13 des actionneurs 8 pour qu'ils appliquent sur la pile de disques 11 associée un effort commandé égal à un effort nominal de parc, puis le module de commande 50 active les organes de blocage 14 pour bloquer les poussoirs 13. L'alimentation des moteurs électriques des actionneurs peut alors être coupée. Les poussoirs 13 ainsi bloqués continuent à exercer sur les piles de disques 11 un effort de parc qui immobilise l'aéronef.

Cependant, dans certaines circonstances, cet effort de parc peut diminuer dangereusement.

Supposons par exemple que l'aéronef, avant son immobilisation, ait subi un décollage avorté à pleine charge, ce qui constitue bien souvent la circonstance d'utilisation la plus sévère pour les freins d'un aéronef commercial. La pile de disques 11 a alors dégagé en quelques secondes une quantité importante de chaleur.

Supposons alors que les poussoirs 13 aient été bloqués une ou deux minutes après ce décollage avorté.

La chaleur dégagée par la pile de disques 11 provoque alors une dilatation du tube de torsion 9, qui s'allonge progressivement et atteint sa longueur maximale plusieurs minutes après la fin du freinage.

La dilatation du tube de torsion 9, qui n'est pas compensée par la dilatation de la pile de disques 11, provoque un éloignement des actionneurs 8 par rapport à la pile de disques 11, ce qui conduit à une diminution progressive de l'effort de parc.

Pour pallier cet inconvénient, on propose alors, selon l'invention, d'ajuster l'effort de parc d'au moins l'un des actionneurs 8 en débloquant le poussoir 13 de cet actionneur, en corrigeant la position du poussoir 13, et en bloquant de nouveau le poussoir 13.

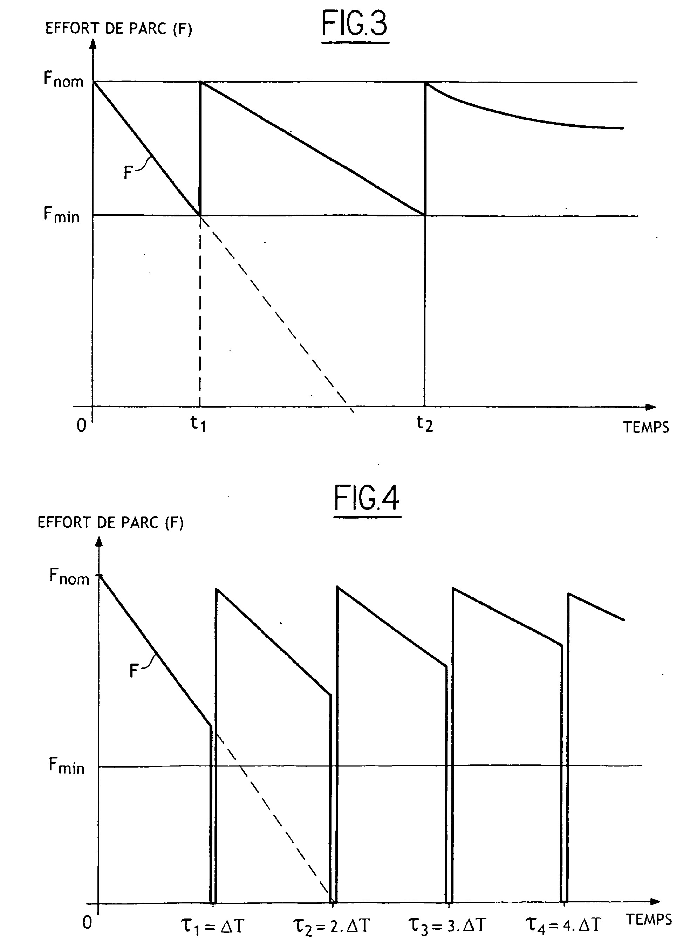

Un premier mode de mise en oeuvre du procédé de l'invention est maintenant détaillé en référence à la figure 3.

Le procédé de l'invention est ici appliqué à des freins munis d'actionneurs 8 asservis en effort, chaque actionneur comportant des moyens de mesure de l'effort exercé par le poussoir 13 sur la pile de disques 11 associée.

Sur le graphe de la figure 3, on a représenté les évolutions dans le temps de l'effort de parc F exercé par l'un des actionneurs 8 sur la pile de disques 11 associée. Le temps t=0 correspond au moment où le poussoir 13 de l'actionneur est bloqué par l'organe de blocage 14 dans une position dans laquelle il exerce un effort égal à l'effort nominal de parc Fnom. Comme expliqué précédemment, l'effort de parc F a tendance à diminuer sous l'effet des dilatations. Si on le laisse évoluer au gré de ces dilatations, l'effort de parc F pourrait aller jusqu'à s'annuler, comme illustré par la courbe en pointillés.

Pour pallier cet inconvénient, on mesure l'effort exercé par le poussoir 13, et dès qu'il franchit un seuil d'effort Fmin, on déclenche de façon automatique un ajustement de l'effort de parc comportant les opérations suivantes :
- débloquer le poussoir 13 ;
- corriger la position du poussoir 13 de sorte que l'effort exercé par le poussoir, qui est mesuré par le capteur d'effort équipant l'actionneur, soit de nouveau égal à l'effort Fnom ;
- bloquer de nouveau le poussoir 13.

Comme cela est visible à la figure 3, aux instants t1 et t2 où l'effort de parc F atteint le seuil Fmin, l'effort de parc F est alors remonté sous l'effet de la mise en oeuvre de l'étape d'ajustement selon l'invention pour retrouver le niveau Fnom.

Bien sûr, les dilatations cessent à un moment donné, et l'effort de parc F ne diminue plus, de sorte qu'il devient inutile de remonter cet effort.

De façon équivalente, plutôt que de mesurer l'effort exercé par le poussoir 13 sur la pile de disques 11, on peut estimer les dilatations du tube de torsion 9 au moyen d'une thermosonde 70 (visible à la figure 2) placée dans le tube de torsion 9 dont le signal est représentatif de la dilatation du tube de torsion. Il suffit alors de déclencher l'étape d'ajustement de l'effort de parc en réponse au franchissement de la dilatation d'un ou de plusieurs seuils de dilatation prédéterminés.

Le procédé décrit ci-dessus peut bien entendu être mis en oeuvre alors que l'aéronef est sous tension. La valeur de l'effort de parc est alors surveillée en permanence.

Le procédé décrit ci-dessus peut également être mis en oeuvre lorsque l'aéronef est arrêté et hors tension. La seule source électrique disponible est alors la batterie de bord de l'aéronef. Le système de freinage est alors programmé pour vérifier l'effort de parc F de l'actionneur non pas de façon continue, comme précédemment, mais à intervalles réguliers (par exemple toutes les minutes), afin d'économiser la batterie. Si cet effort de parc F est trouvé inférieur au seuil Fmin, l'effort de parc F est alors ajusté selon l'invention. La surveillance à intervalles réguliers est mise en oeuvre pendant une durée déterminée (par exemple 10 minutes) après la mise hors tension de l'aéronef.

Le procédé décrit ci-dessus peut être appliqué à tous les actionneurs de l'aéronef, soit un par un, soit simultanément. Dans ce dernier cas cependant, on veillera à ce que l'effort total généré par tous les actionneurs de l'aéronef ne descende pas en dessous d'un minimum qui remettrait en cause l'immobilité de l'aéronef.

En pratique, avant de débloquer le poussoir 13 d'un des actionneurs 8, le moteur électrique associé est asservi de façon qu'il maintienne la position du poussoir. Ainsi lorsque l'organe de blocage 14 est relâché, le moteur électrique prend le relais pour maintenir le poussoir 12 dans sa position et ainsi empêcher une chute brutale non contrôlée de l'effort appliqué par le poussoir 13 sur la pile de disques 11 associée.

En variante, on peut encore asservir le moteur en effort de sorte qu'il exerce sur le poussoir 13 un effort égal à l'effort mesuré préalablement au déblocage du poussoir 13, ce qui soulage l'organe de blocage 14 et facilite ainsi son déblocage.

Selon un autre mode de mise en oeuvre du procédé de l'invention illustré à la figure 4, le procédé de l'invention est encore applicable à des freins munis d'actionneurs asservis en position. Pour exercer un effort de parc F sur ce type d'actionneur, on fait venir le poussoir 13 au contact de la pile de disques 11, on relève une position de contact du poussoir 13, et on déplace le poussoir 13 à partir de cette position de contact d'une distance donnée correspondant à l'effort commandé désiré compte tenu d'une raideur du frein ; puis on bloque le poussoir 13 pour qu'il exerce sur la pile de disques un effort de parc F. Soit D la distance qui correspond à l'effort Fnom compte tenu d'une raideur K du frein prise à température ambiante.

Une difficulté particulière survient ici de ce que, pour la mise en oeuvre de l'étape de réajustement, il importe de réactualiser la position de contact qui a pu évoluer en raison des dilatations du frein.

A cet effet, la mise en oeuvre du procédé de l'invention comporte les étapes de :
- débloquer le poussoir 13 ;
- faire reculer le poussoir 13 jusqu'à ce qu'il ne soit plus en contact avec la pile de disques 11 ;
- faire avancer le poussoir 13 jusqu'à une position de contact avec la pile de disques 11 ;
- avancer le poussoir de la distance D comptée à partir de cette position de contact ;
- bloquer le poussoir 13.

En réactualisant la position de contact à chaque réajustement, on s'assure que l'effort ainsi appliqué est sensiblement égal à l'effort Fnom de sorte que l'on fait remonter l'effort de parc à un niveau sensiblement égal au niveau de l'effort de parc initial.

Cependant, il n'est pas possible de garantir que l'effort de parc ainsi réajusté soit égal à l'effort initial de valeur Fnom, bien que le poussoir ait été déplacé de la même distance D, en raison des possibles modifications de la raideur K du frein sous l'effet de la chaleur dégagée. Néanmoins, ces modifications sont en général assez faibles, et l'effort ainsi réajusté sera en pratique proche de l'effort Fnom.

En l'absence de mesure de l'effort de parc, il n'est bien sûr pas possible de détecter le franchissement d'un seuil d'effort susceptible de servir au déclenchement du réajustement de l'effort de parc, comme dans le cas des actionneurs asservis en effort.

On choisit ici de déclencher le réajustement de l'effort de parc de façon périodique, chaque instant de réajustement τ1...τ4 étant espacé du suivant d'un intervalle de temps Δt choisi de sorte qu'entre deux réajustements, l'effort de parc F n'ait pas le temps de descendre en dessous d'un seuil d'effort Fmin donné, même dans les conditions les plus sévères de dilatation. Comme cela est illustré ici, l'intervalle de temps Δt est choisi de sorte que l'effort de parc reste en permanence au dessus de l'effort Fmin compte tenu d'une évolution prévisible de l'effort de parc F.

On veillera à ce que le déblocage du poussoir 13 ne conduise pas à une perte brutale d'effort sur l'actionneur concerné, en asservissant le moteur électrique en position avant le déblocage du poussoir.

On notera que l'étape de recul du poussoir 13 implique un relâchement complet de l'effort exercé par l'actionneur sur la pile de disques 11, comme cela est clairement visible sur la figure 4 où à chaque réajustement, l'effort de parc F s'annule. Il n'est dès lors pas possible d'effectuer un réajustement pour tous les actionneurs de l'aéronef simultanément, sauf à risquer de libérer l'aéronef.

En pratique, il faut donc prendre garde à ce qu'un nombre suffisant d'actionneurs soient maintenus bloqués pendant que l'on réajuste l'effort de parc des autres actionneurs.

Diverses stratégies sont ainsi possibles : on peut décider que, sur chacun des freins, on mette en oeuvre le procédé de l'invention sur un seul actionneur à la fois, ou, à tout le moins, pour une partie au plus des actionneurs de l'aéronef, l'autre partie des actionneurs étant maintenue de sorte qu'aucun des freins ne soit jamais relâché.

On peut encore décider de mettre en oeuvre le procédé de l'invention de façon simultanée pour tous les actionneurs d'un seul frein, ce qui a pour conséquence de relâcher momentanément le frein concerné. Cependant, les autres freins sont maintenus sous effort, de sorte que l'aéronef reste immobilisé. Par exemple, on réajuste l'effort de parc des actionneurs du frein 1, les freins 2,3,4 restant en position. Puis on réajuste l'effort de parc des actionneurs du frein 2, les freins 1,3,4 restant en position, et ainsi de suite jusqu'à ce que tous les efforts de parc soient réajustés.

Bien sûr, il importe de prendre garde à ce que, à tout moment, l'effort de freinage total exercé par tous les actionneurs de l'aéronef reste suffisant pour maintenir l'aéronef immobile, en tenant compte des actionneurs pouvant être relâchés lors de l'étape de réajustement, ainsi que de l'effort de parc diminué des autres actionneurs n'ayant pas subi l'étape de réajustement.

L'invention n'est pas limitée à ce qui vient d'être décrit, mais bien au contraire englobe toute variante entrant dans le cadre défini par les revendications.

En particulier, bien que l'on ait indiqué ici que le réajustement consistait à faire remonter l'effort de maintien de parc, le réajustement pourra également consister à faire baisser l'effort de maintien de parc, si celui-ci a augmenté en conséquence par exemple d'un refroidissement nocturne important de l'aéronef qui a été immobilisé sur un terrain désertique. L'effort de parc pourrait également augmenter si l'actionneur a été bloqué au moment où le tube de torsion atteint sa dilatation maximale après un freinage.

Bien que les actionneurs agissent ici sur une pile de disques, le frein pourra comporter d'autres types d'éléments de friction, tel qu'un disque et des garnitures, ou encore un tambour et des mâchoires.

Bien que l'on ait indiqué que lors de l'étape de réajustement, l'on remonte l'effort de parc à son niveau nominàl, on pourra mettre en oeuvre d'autres stratégies, comme remonter l'effort de parc à un niveau plus haut que l'effort nominal par exemple s'il est constaté que l'effort de parc diminue plus vite que prévu, ou encore à un niveau plus bas par exemple s'il est constaté que le véhicule est vidé et donc moins lourd.

Bien que dans le mode de mise en oeuvre illustré, l'on ait indiqué que pour ajuster l'effort de parc, on commence par débloquer le poussoir, puis on rebloque le poussoir après ajustement, il n'est pas forcément nécessaire de débloquer le poussoir. En effet, certains actionneurs comportent un organe de blocage à friction que le moteur électrique peut forcer lorsque l'organe de blocage est activé, de sorte qu'il est possible d'ajuster l'effort de parc sans débloquer le poussoir au préalable.

Bien que l'on ait indiqué que l'effort de parc est maintenu par un organe de blocage, on pourra également mettre en oeuvre le procédé de l'invention sur un frein à actionneur irréversible, sans organe de blocage. L'effort de parc est alors simplement maintenu du fait des frottements dans la transmission entre le moteur électrique et le poussoir. Il n'y a donc pas lieu de débloquer le poussoir avant l'ajustement de l'effort de parc.

## Revendications

1. Procédé de gestion d'un effort de parc dans un système de freinage pour véhicule équipé d'au moins un frein électrique comportant au moins un actionneur électromécanique (8) qui comprend un poussoir (13) actionné par un moteur électrique pour appliquer sélectivement un effort sur des éléments de friction (11) du frein, le procédé comportant l'étape de faire exercer par le poussoir (13) un effort de parc (F) initialement égal à un effort de parc nominal (Fnom) sur les éléments de friction de sorte que l'effort de parc (F) soit maintenu en l'absence d'action du moteur électrique, **caractérisé en ce que** le procédé comporte l'étape d'ajuster au moins une fois ledit effort de parc (F).

2. Procédé selon la revendication 1, adapté à un actionneur ayant un organe de blocage (14) du poussoir (13) qui est activé pour maintenir l'effort de parc (F), **caractérisé en ce qu'**il comporte l'étape de désactiver l'organe de blocage (14) avant ajustement de l'effort de parc, puis réactiver l'organe de blocage après ajustement de l'effort de parc.

3. Procédé selon la revendication 1, **caractérisé en ce que** l'étape de réajustement de l'effort de parc (F) est déclenchée à des instants déterminés en fonction d'une évolution de l'effort de parc (t1, t2).

4. Procédé selon la revendication 3, **caractérisé en ce que** ces instants correspondent à un franchissement d'au moins un seuil prédéterminé (Fmin) par l'effort de parc (F).

5. Procédé selon la revendication 3, **caractérisé en ce que** ces instants correspondent à un franchissement d'au moins un seuil prédéterminé par une information (70) représentative d'une dilatation d'au moins une pièce structurelle (9) du frein.

6. Procédé selon la revendication 1, **caractérisé en ce que** l'étape de réajustement de l'effort de parc (F) est déclenchée à des instants indépendants d'une évolution de l'effort de parc (τ1, τ2 ...).

7. Procédé selon la revendication 1, **caractérisé en ce que**, préalablement à l'étape d'ajustement, le moteur électrique de l'actionneur est asservi pour empêcher le poussoir (13) de reculer par rapport aux éléments de friction (11).

8. Procédé selon la revendication 1, **caractérisé en ce que** l'ajustement de l'effort de parc comprend l'action de commander le moteur électrique pour faire coïncider sensiblement l'effort de parc F avec l'effort de parc nominal (Fnom).

9. Procédé selon la revendication 1, appliqué à un actionneur (8) asservi en position, **caractérisé en ce que** l'étape de réajustement de l'effort de parc (F) comprend les opérations de :
- éloigner le poussoir (13) des éléments de friction (11);
- avancer le poussoir (13) jusqu'à une position de contact avec les éléments de friction (11);
- avancer le poussoir (13) d'une distance prédéterminée (D) comptée à partir de ladite position de contact.

10. Procédé selon la revendication 1, appliqué à un système de freinage comportant plusieurs actionneurs (8), **caractérisé en ce qu'**il est mis en oeuvre de sorte qu'à tout instant, l'étape de réajustement n'est conduite simultanément que pour une partie au plus des actionneurs du véhicule.

11. Procédé selon la revendication 10, appliqué à un système de freinage dont au moins un frein comporte plusieurs actionneurs (8), **caractérisé en ce qu'**il est mis en oeuvre de sorte, qu'à tout instant, l'étape de réajustement n'est conduite simultanément que pour une partie au plus des actionneurs du frein.

## Claims

1. A method of managing a parking force in a vehicle brake system equipped with at least one electric brake having at least one electromechanical actuator (8) which comprises a pusher (13) actuated by an electric motor to apply a force selectively onto friction elements (11) of the brake, the method including the step of causing the pusher (13) to exert a parking force (F) that is initially equal to a nominal parking force (Fₙₒₘ) on the friction elements so that the parking force (F) is maintained in the absence of drive from the electric motor, said method being **characterized in that** it includes the step of adjusting said parking force (F) at least once.

2. A method according to claim 1, adapted to an actuator having a locking member (14) for locking the pusher (13), which locking member is activated to maintain the parking force (F), said method being **characterized in that** it includes the step of de-activating the locking member (14) prior to adjusting the parking force, and then of re-activating the locking member after adjusting the parking force.

3. A method according to claim 1, **characterized in that** the step of readjusting the parking force (F) is triggered at instants (t₁, t₂) determined as a function of variation in the parking force.

4. A method according to claim 3, **characterized in that** said instants correspond to the parking force (F) crossing at least one predetermined threshold (Fₘᵢₙ).

5. A method according to claim 3, **characterized in that** said instants correspond to information (70) representative of expansion of at least one structural part (9) of the brake crossing at least one predetermined threshold.

6. A method according to claim 1, **characterized in that** the step of re-adjusting the parking force (F) is triggered at instants independent of variation in the parking force (τ1, τ2, ...).

7. A method according to claim 1, **characterized in that**, prior to the adjustment step, the electric motor of the actuator is servo-controlled so as to prevent the pusher (13) from backing away from the friction elements (11).

8. A method according to claim 1, **characterized in that** the adjustment of the parking force comprises the action of controlling the electric motor so as to cause the parking force F to coincide with the nominal parking force (Fₙₒₘ).

9. A method according to claim 1, used for an actuator (8) that is servo-controlled in position, said method being **characterized in that** the step of re-adjusting the parking force (F) comprises the following operations:
moving the pusher (13) away from the friction elements (11);
advancing the pusher (13) into a contact position in which it is in contact with the friction elements (11);
advancing the pusher (13) over a predetermined distance (D) measured from said contact position.

10. A method according to claim 1, used in a brake system having a plurality of actuators (8), said method being **characterized in that** it is implemented so that, at any time, the re-adjustment step is performed simultaneously only for a fraction only of the actuators of the vehicle.

11. A method according to claim 10, used in a brake system in which at least one of the brakes has a plurality of actuators (8), the method being **characterized in that** it is implemented so that, at any time, the re-adjustment step is performed simultaneously for a fraction only of the actuators of the brake.

## Patentansprüche

1. Verfahren zur Regelung einer Parkkraft in einem Bremssystem für ein Fahrzeug, das mit mindestens einer elektrischen Bremse ausgerüstet ist, die mindestens einen elektromechanischen Aktuator (8) umfasst, der einen Stößel (13) enthält, der von einem Elektromotor betätigt wird, um selektiv eine Kraft auf Reibungselemente (11) der Bremse auszuüben, wobei das Verfahren den Schritt des Ausübens einer Parkkraft (F), die anfänglich gleich einer nominalen Parkkraft (Fnom) ist, durch den Stößel (13) auf die Reibungselemente umfasst, derart, dass die Parkkraft (F) bei fehlender Wirkung des Elektromotors gehalten wird, **dadurch gekennzeichnet, dass** das Verfahren den Schritt umfasst, dass die genannte Parkkraft (F) mindestens einmal nachgestellt wird.

2. Verfahren nach Anspruch 1, geeignet für einen Aktuator, der ein Blockierelement (14) zum Blockieren des Stößels (13) hat, das aktiviert wird, um die Parkkraft (F) zu halten, **dadurch gekennzeichnet, dass** es den Schritt des Deaktivierens des Blockierelements (14) vor dem Nachstellen der Parkkraft und des anschließenden Reaktivierens des Blockierelements nach dem Nachstellen der Parkkraft umfasst.

3. Verfahren nach Anspruch 1, **dadurch gekennzeichnet, dass** der Schritt des Nachstellens der Parkkraft (F) zu vorgegebenen Zeitpunkten abhängig von einer Entwicklung der Parkkraft (t1, t2) ausgelöst wird.

4. Verfahren nach Anspruch 3, **dadurch gekennzeichnet, dass** diese Zeitpunkte einem Überschreiten mindestens eines Schwellenwertes (Fmin) durch die Parkkraft (F) entsprechen.

5. Verfahren nach Anspruch 3, **dadurch gekennzeichnet, dass** diese Zeitpunkte einem Überschreiten mindestens eines vorgegebenen Schwellenwertes durch eine Information (70) entsprechen, die repräsentativ für eine Dilatation mindestens eines Strukturteils (9) der Bremse ist.

6. Verfahren nach Anspruch 1, **dadurch gekennzeichnet, dass** der Schritt des Nachstellens der Parkkraft (F) zu Zeitpunkten ausgelöst wird, die unabhängig von einer Entwicklung der Parkkraft (τ1, τ2...) sind.

7. Verfahren nach Anspruch 1, **dadurch gekennzeichnet, dass** der Elektromotor des Aktuators vor dem Schritt des Nachstellens geregelt wird, um zu verhindern, dass der Stößel (13) relativ zu den Reibungselementen (11) zurückläuft.

8. Verfahren nach Anspruch 1, **dadurch gekennzeichnet, dass** das Nachstellen der Parkkraft den Schritt umfasst, den Elektromotor so zu steuern, dass die Parkkraft (F) im Wesentlichen mit der nominalen Parkkraft (Fnom) übereinstimmt.

9. Verfahren nach Anspruch 1, angewandt bei einem positionsgeregelten Aktuator (8), **dadurch gekennzeichnet, dass** der Schritt des Nachstellens der Parkkraft (F) die Vorgänge umfasst:
- Entfernen des Stößels (13) von den Reibungselementen (11),
- Vorschieben des Stößels (13) bis in eine Kontaktstellung mit den Reibungselementen (11);
- Vorschieben des Stößels (13) um einen vorgegebenen Abstand (D), der ab der genannten Kontaktstellung berechnet wird.

10. Verfahren nach Anspruch 1, angewandt bei einem Bremssystem, das mehrere Aktuatoren (8) umfasst, **dadurch gekennzeichnet, dass** es derart durchgeführt wird, dass zu jedem Zeitpunkt der Schritt des Nachstellens gleichzeitig nur für höchstens einen Teil der Aktuatoren des Fahrzeugs durchgeführt wird.

11. Verfahren nach Anspruch 10, angewandt bei einem Bremssystem, von dem mindestens eine Bremse mehrere Aktuatoren (8) umfasst, **dadurch gekennzeichnet, dass** es derart durchgeführt wird, dass zu jedem Zeitpunkt der Schritt des Nachstellens gleichzeitig nur für höchstens einen Teil der Aktuatoren der Bremse durchgeführt wird.
